# EUROPEAN PATENT APPLICATION

(11) **EP 1 083 745 A1**
(43) Date of publication of application: **14.03.2001**
(21) Application number: 00307587.6
(22) Date of filing: 04.09.2000
(51) Int. Cl.: H04N 5/44, H04N 5/445

(54) **Remote control device**

(30) Priority: 07.09.1999 GB 9920990
(71) Applicant: Pace Micro Technology PLC, Saltaire, Shipley, BD14 3LF (GB)
(72) Inventor: Mountain, Dale, Bradford, BD15 9LB (GB)
(74) Representative: Wood, Graham

(57) **Abstract**

The present invention provides a remote control device which has the ability to indicate to the user and/or select a previously selected function of electrical apparatus which can be controlled via the remote control device thereby allowing the user to return to the function. The remote control device is provided for use in conjunction with electrical apparatus such as a television set and/or broadcast data receiver, to control functions of the same in response to user manipulation of the remote control. The remote control device includes a plurality of actuating means for selection by the user to determine the configuration of the control signal transmitted from the device and at least one actuation means when selected causes a function of the electrical apparatus at that time to be held in a memory provided in the device and/or electrical apparatus and/or an indication to be generated to the user to represent that function. This then allows the user to change and select functions but still be able to easily return to the original function on the basis of the memory information and/or indication..

## Description

The invention to which this application relates is an improvement to a control device of the type which is provided to allow a change in function of electrical apparatus. The improvement is provided to allow the generation of a memory in which a previously selected function is retained in memory and can be reselected by the depression of a button of the remote control device.

The use of remote control devices is now commonplace and the general use of the same to control and change functions of electrical apparatus without actually having to go to the apparatus is probably the more common method used for controlling the apparatus.

There are many different formats of remote controls but they basically comprise a means for emitting a control signal, typically by infra red signal transmission means, to a receiver means provided in or at the electrical apparatus. The receiver means allows for the reception of the signal and the processing and converting of the system into an electrical control signal for the apparatus. The form of signal which is transmitted is determined by the depression by the user of one of a number of buttons provided on the remote control device. The buttons are typically marked with an indication of their function such as volume, channel numbers and so on and the signal generated causes the change in function of the electrical apparatus as indicated on the button which is selected to be depressed.

One problem which has been encountered with use of remote controls and one which is increasingly prevalent as the number of available functions which can be selected via the remote control devices increases is the inability to be able to return to a previously selected function automatically by using the remote control device.

This can leave the user unable to return to the previously selected function so that, for example, if the user was watching a particular program on a particular channel and, during an advertising break decided to review a number of other channels by using the remote control device, the user may not remember and has no indication of the original channel so that he may not be able to find the program he was previously watching and miss at least part of the same when the advertising break finishes.

It is also previously known to be able to generate a list of "user preferred" channels which allows the user to view the list of preferred channels rather than all available channels. However this still requires the user to refer to a listing of the preferred channels which is generated on screen to be able to then select the channel which they wish to watch.

The aim of the present invention is to provide a remote control device which has the ability to indicate to the user and/or select a previously selected function thereby allowing the user to return to the function.

In a first aspect of the invention there is provided a A control system including a remote control device for use in conjunction with electrical apparatus to control functions of the same in response to user manipulation of the remote control, said device including a means for transmitting a control signal for controlling a function of the electrical apparatus, a plurality of actuating means for selection by the user to determine the configuration of the control signal transmitted and characterised in that the remote control device includes at least one actuation means which when selected causes a function of the electrical apparatus at that time to be held in a memory and/or for an indication of the function to be generated for the user and allows for the remote control device to subsequently be used to return the apparatus to the previous function with reference to the memory and/or indication.

Embodiments are now described with reference to the controlling of a function using the remote control device with respect to the selection of channels to be viewed by using a remote control device in conjunction with television channel selecting apparatus, but it should be appreciated that this description can be referred and applied to the use of a remote control device to select any control function for electrical apparatus.

In one embodiment the remote control device has a display means or the apparatus display means is used which, when the said actuation means is selected, displays the channel number which was selected at the time of depression of the actuation means. This allows the user to refer to the display subsequently and, if they wish to return to that channel, they need simply depress the relevant actuation means.

In addition or alternatively and in a preferred embodiment, when the said actuation means has been depressed the repeat depression of that actuation means or another designated actuation means will automatically cause a control signal to be generated from the remote control device to the electrical apparatus which will cause the same to return to the channel details which are held in the memory. This allows the user to select as many additional channels as they wish in the intervening period of time but still subsequently return to the channel details held in the memory by the depression of the appropriate actuation means.

Thus in accordance with the invention the user is able to select to memorise in the apparatus a function of the apparatus, such as a particular channel, by the depression of a defined actuating means on the remote control device, then proceed to change a number of functions, such as look at a number of channels, and then when they wish, return to the function details in the memory, by the selection of the appropriate actuation means. The user can return to the same without even being required to remember what the original channel was, as the details are held in the device memory. Furthermore, the user is not required to select the required channel from a number of memorised channel details, as again they may not be able to remember the same, as in this invention it is preferred that only the details of the last function selected to be memorised by the user via the remote control device is stored to be selected automatically by the user at a later time. It is submitted that this has not been appreciated or disclosed in any of the known prior art systems.

In one embodiment of the invention the memory capability is provided in the remote control device and, upon depression of the memory actuation means a signal is sent from the apparatus to the device which indicates the particular function such as the channel which is selected at that time. That information is held in the device memory so that the subsequent selection of the same from the memory will cause the required configuration of signal to be transmitted from the device to the apparatus to return the same to the memorised function or channel.

In an alternative embodiment, the depression of the memory actuation means on the remote control device causes a signal to be sent to the apparatus which causes the apparatus to retain in a memory therein the function or channel selected at that instant.

It should be appreciated that while reference is made to one memory actuation means, a number of the same may be provided; or the same actuation means may be used for the selection of different functions with a different number of depressions or actuation means may be required to be used in a particular depression configuration to achieve the selection of the memory function.

In a further aspect of the invention there is provided electrical apparatus including an item which can be controlled to perform a number of functions and a remote control device which can, in response to user actuation, be used to control and select functions of the item, said device including a means for transmitting a control signal for selecting a function of the item, a plurality of actuating means for selection by the user to determine the configuration of the control signal transmitted and characterised in that the remote control device includes at least one actuation means which when selected causes a function of the item at that time to be held in a memory and/or an indication to be generated representing the selected function.

In one embodiment the item is a television set and/or broadcast data receiver and the functions controlled are the selection of television programme channels.

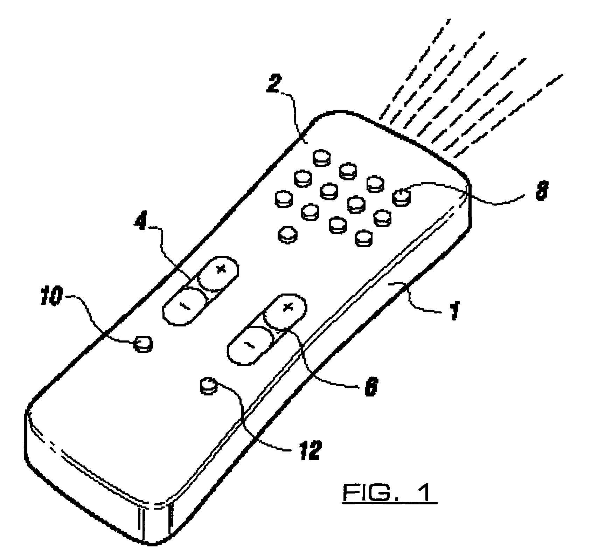

A specific embodiment of the invention is now described with reference to the accompanying drawing wherein the drawing indicates an actuation means in the form of a layout of a series of "buttons" for a remote control device in accordance with one, simplified, embodiment of the invention.

The remote control device 1 includes a series of buttons 2, the selective depression of which by a user, causes the generation of appropriately configured signals to be emitted to allow the selection of channels to watch on television apparatus. The button 4 allows a change in volume, button 6 allows the scrolling of channels and an on/off button 8 allows the apparatus to be switched between standby and on conditions. In addition, buttons 10,12 are provided and these can be operated in the following manner in accordance with the invention.

An example of the utility of the invention is now provided. If a user is watching a particular program on a particular channel then they will in most likelihood be aware of the channel number. If during the program which they are viewing a commercial break occurs, the user may wish to look though other channels to obtain other information, such as an update on news events, sports scores or the like while still wishing to return to the original channel in time to recommence viewing of the programme of interest after the commercial break. Conventionally however, if the user views a number of channels in the time of the commercial break, they may miss the recommencement of the programme as they cannot remember or easily locate the original channel on which the programme of interest was being shown and this may cause them to miss all or at least part of the programme.

The current invention can be used to avoid this problem. When the user decides that they wish to leave the original channel and select other channels they can first depress the button 10. This button is designated as a memory button and causes the original channel details to be held in a memory in either the remote control device or the apparatus. The user can then proceed to select the other channels as they desire. When the user wishes to return to the original channel they depress the button 12. This causes the processor for the remote control device to refer to the memory, identify the required channel details for the channel number held in the memory and then generate a suitably configured signal to return the apparatus to the channel in accordance with the information held in the memory.

In a variation on the above, the remote control device, in addition to or instead of memorising the original channel identity, may cause the display, on the television screen of the apparatus or on a display on the remote control device, of the original channel number. This channel number is displayed until the user reselects the channel number displayed via the remote control device or opts to cancel the display of the number. This is a simpler version of the invention in that it does not require the storage of the function or channel details in a memory but only requires that an indication is generated to the user either on screen or audibly, which allows the user to refer to the indication when they wish to return to the original function. With this referral the user can then select the appropriate actuation means on the remote control device and return to the original function.

## Claims

1. A control system including a remote control device for use in conjunction with electrical apparatus to control functions of the same in response to user manipulation of the remote control, said device including a means for transmitting a control signal for controlling a function of the electrical apparatus, a plurality of actuating means for selection by the user to determine the configuration of the control signal transmitted and characterised in that the remote control device includes at least one actuation means which when selected causes a function of the electrical apparatus at that time to be held in a memory and/or for an indication of the function to be generated for the user and allows the remote control device to subsequently be used to return the apparatus to the previous function with reference to the memory and/or indication.

2. A control system according to claim 1 characterised in that the device is used in conjunction with apparatus in the form of a television set and/or broadcast data receiver and is used in conjunction with a display means which when the said actuation means is selected, displays an indication to the user of the function of the television set and/or receiver.

3. A control system device according to claim 2 characterised in that the function is a channel of the television set and/or receiver.

4. A control system according to claim 2 characterised in that the display means is provided on the remote control device.

5. A control system according to claim 2 characterised in that to return the television set and/or receiver to the function , the user refers to the indication and selects appropriate actuation means on the remote control device.

6. A control system according to claim 1 characterised in that once the said actuation means has been selected the repeat selection of the same actuation means or another designated actuation means causes the remote control device to refer to the memory, identify the stored function and generate a signal to the apparatus to return the apparatus to the memorised function condition.

7. A control system according to claim 1 characterised in that once the actuation means has been selected and the function held in memory the remote control device can be used to select a plurality of other functions without altering the function held in memory.

8. A control system according to claim 1 characterised in that the memory is provided in the remote control device and, upon selection of the appropriate actuation means a signal is sent from the remote control device to the apparatus to generate a return signal from the apparatus to the device with data to indicate the particular function which is selected at that time and said data is held in the memory.

9. A control system according to claim 1 characterised in that upon selection of the actuation means on the remote control device a signal is transmitted to the apparatus which then retains in a memory in the apparatus, details of the function selected at that time.

10. A control system according to any of the preceding claims characterised in that the actuation means can be any of a single button or a series of buttons required to be depressed in a predetermined configuration.

11. Electrical apparatus including an item which can be controlled to perform a number of functions and a remote control device which can, in response to user actuation, be used to control and select functions of the item, said device including a means for transmitting a control signal for selecting a function of the item, a plurality of actuating means for selection by the user to determine the configuration of the control signal transmitted and characterised in that the remote control device includes at least one actuation means which when selected causes a function of the item at that time to be held in a memory and/or an indication to be generated representing the selected function.

12. Electrical apparatus according to claim 11 characterised in that the item is a television set and/or broadcast data receiver and the functions controlled are the selection of television programme channels.

13. Electrical apparatus according to claim 11 characterised in that the memory is provided in the remote control device.

14. Electrical apparatus according to claim 11 characterised in that the indication is generated on a display screen provided as part of the apparatus.
